# FASCICULE DE BREVET EUROPEEN

(11) **EP 0 467 765 B1**
(45) Date de publication et mention de la délivrance du brevet: **15.02.1995**
(21) Numéro de dépôt: 91401961.7
(22) Date de dépôt: 15.07.1991
(51) Int. Cl.: G01C 13/00

(54) **Procédé et système de mesure à la traîne dans l'eau, sous hélicoptère**
Verfahren und System um unter einem Hubschrauber im Wasser schleppend zu messen
Procedure and system for measuring under water on a tow line from a helicopter

(30) Priorité: 17.07.1990 FR 9009107
(43) Date de publication de la demande: 22.01.1992
(73) Titulaire: COMMISSARIAT A L'ENERGIE ATOMIQUE, 75015 Paris (FR)
(72) Inventeur: Ruzie, Gérard, F-91410 Dourdan (FR); Batot, Jean, F-91290 La Norville (FR)
(74) Mandataire: Signore, Robert

(56) Documents cités:
- DE-A- 2 045 252
- DE-A- 2 058 746
- FR-A- 2 380 534
- US-A- 3 404 565
- US-A- 3 469 444

## Description

La présente invention concerne un procédé et un système de mesure à la traîne dans l'eau, notamment en milieu marin.

Elle s'applique en particulier à la bathymétrie.

Il est connu de faire des mesures de bathymétrie à partir d'un bateau sous la coque duquel sont fixés des moyens de sondage constitués par un dispositif appelé "écho-sondeur".

Cependant, dès que la houle devient trop importante, le pinceau étroit du faisceau acoustique engendré par le dispositif ne permet plus de faire de bonnes mesures de profondeur, en particulier lorsque le bateau est de petite taille.

La présente invention vise à remédier à cet inconvénient et, plus généralement, à permettre de faire de bonnes mesures en soustrayant les moyens de mesure à l'influence de la houle.

On connaît, par DE-A-2045252, un véhicule sous-marin dont la conception permet de remédier à des défauts inhérents à la commande de sa flottabilité hydrostatique et de remplacer, au moins en partie, cette flottabilité hydrostatique par un processus conduisant à une poussée hydrodynamique.

On connaît aussi, par US-A-3469444, un lanceur qui est porté par un hélicoptère et qui est apte à envoyer une sonde de mesure dans la mer. Cette sonde reste reliée par un câble à des moyens de mesure situés dans l'hélicoptère.

L'invention a tout d'abord pour objet un procédé de mesure à la traîne dans l'eau, ce procédé étant caractérisé en ce que des moyens porteurs, auxquels sont fixés des moyens de mesure, sont traînés sous l'eau par un hélicoptère, par l'intermédiaire d'un câble, et en ce que les moyens porteurs, munis des moyens de mesure, ont une forme hydrodynamique telle qu'ils restent à une profondeur sensiblement constante lorsqu'ils sont traînés sous l'eau par l'intermédiaire du câble.

Un hélicoptère permet d'intervenir dans des endroits d'accès difficile voire dangereux pour un bateau, tels que les zones à déferlantes, les zones à pinacles coraliens, les rivières rapides, les lacs de barrage.

Les moyens porteurs peuvent comporter, à l'avant, une partie sensiblement tronconique prévue pour leur donner, lorsqu'ils sont traînés sous l'eau, une poussée descendante qui compense la poussée ascendante due au câble.

Mais, de préférence, les moyens porteurs comprennent un corps de forme allongée et sensiblement cylindrique, un aileron de stabilisation, qui surmonte ce corps, et un empennage fixé à l'arrière du corps.

Selon un mode de mise en oeuvre particulier du procédé objet de l'invention, des moyens de lestage sont fixés à la partie aérienne du câble.

Ceci permet, entre autres, d'accroître la précision des mesures.

La présente invention concerne également un système de mesure à la traîne dans l'eau, ce système étant caractérisé en ce qu'il comprend des moyens de mesure et des moyens porteurs auxquels sont fixés les moyens de mesure et qui sont destinés à être traînés sous l'eau par un hélicoptère, par l'intermédiaire d'un câble, et en ce que les moyens porteurs, munis des moyens de mesure, ont une forme hydrodynamique telle qu'ils restent à une profondeur sensiblement constante lorsqu'ils sont traînés sous l'eau par l'intermédiaire du câble.

Selon un mode de réalisation particulier du système objet de l'invention, les moyens porteurs comprennent, à l'avant, une partie sensiblement tronconique prévue pour leur donner, lorsqu'ils sont traînés sous l'eau, une poussée descendante qui compense la poussée ascendante due au câble.

Les moyens porteurs peuvent comprendre :
- à l'avant, la partie sensiblement tronconique,
- à l'arrière, une dérive et deux gouvernes et,
- deux ailerons latéraux prolongeant la partie sensiblement tronconique.

Selon un mode de réalisation préféré du système objet de l'invention, les moyens porteurs comprennent un corps de forme allongée et sensiblement cylindrique, un aileron de stabilisation, qui surmonte ce corps, et un empennage fixé à l'arrière du corps.

Le système objet de l'invention peut comprendre en outre des moyens de contrôle d'attitude des moyens porteurs, qui sont montés sur ces derniers.

Ces moyens de contrôle d'attitude sont par exemple prévus pour donner des informations sur le cap et/ou la profondeur et/ou l'altitude au-dessus du fond et/ou les inclinaisons radiale et transverse des moyens porteurs.

Dans une réalisation particulière du système objet de l'invention, ce système comprend en outre des moyens de lestage destinés à être fixés à la partie aérienne du câble.

Les moyens de lestage peuvent comprendre une partie centrale sensiblement cylindrique, un empennage et deux tuyères latérales.

Ces tuyères latérales permettent d'accroître le lestage de façon aérodynamique.

La partie centrale des moyens de lestage peut être pourvue de moyens de serrage du câble et d'une lumière permettant au câble de traverser la partie centrale.

Enfin, dans une réalisation particulière de l'invention, les moyens porteurs comportent un logement qui débouche à la base de ces moyens porteurs et qui contient les moyens de mesure.

Ces moyens de mesure peuvent être des moyens de sondage, par exemple des moyens bathymétriques.

La présente invention sera mieux comprise à la lecture de la description d'exemples de réalisation donnés ci-après à titre purement indicatif et nullement limitatif, en référence aux dessins annexés sur lesquels :
- la figure 1 illustre schématiquement un mode de mise en oeuvre particulier du procédé de mesure objet de l'invention,
- la figure 2 illustre schématiquement la façon dont le câble est fixé à l'hélicoptère utilisé dans le procédé,
- la figure 3 est une vue schématique en perspective de moyens de lestage utilisés dans le procédé illustré par la figure 1,
- la figure 4 est une vue schématique en perspective de moyens porteurs auxquels sont fixés les moyens de lestage,
- la figure 5 est une vue en coupe longitudinale schématique des moyens porteurs de la figure 4, et
- la figure 6 illustre schématiquement un mode de réalisation préféré des moyens porteurs.

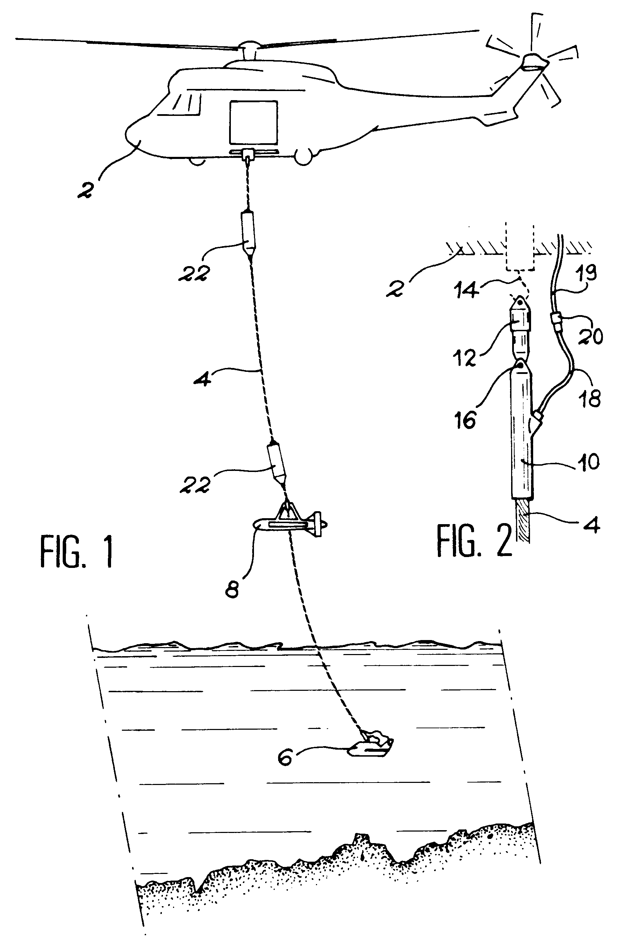

Dans le mode de mise en oeuvre particulier du procédé objet de l'invention, qui est schématiquement illustré par la figure 1, on fait de la bathymétrie, par exemple en milieu marin.

On utilise à cet effet un hélicoptère 2 qui traîne dans l'eau, suivant une trajectoire déterminée, en général linéaire, des moyens bathymétriques.

Le déplacement se fait par l'intermédiaire d'un câble antigiratoire 4 dont une extrémité (extrémité supérieure) est fixée à l'hélicoptère et dont l'autre extrémité (extrémité inférieure) est fixée à des moyens porteurs appropriés 6 auxquels sont fixés les moyens bathymétriques.

Des moyens de lestage 8, dont la fonction sera indiquée par la suite, sont fixés à la partie aérienne du câble.

On voit sur la figure 2 que l'extrémité supérieure du câble 4 est immobilisée dans des moyens de serrage 10.

Ces derniers sont portés par, et articulés sur, un dynamomètre 12 qui est lui-même porté par un crochet 14 dont est pourvu l'hélicoptère 2 et qui est appelé "crochet de sling".

Le dynamomètre est utilisé pour des raisons de sécurité et permet de connaître le poids de l'ensemble qui est porté par l'hélicoptère.

Pour les mêmes raisons, les moyens de serrage 10 sont articulés sur le dynamomètre par l'intermédiaire d'une goupille 16 dont la résistance à la rupture a une valeur déterminée de sorte que la goupille 16 se brise lorsque la traction, sur le dynamomètre, de l'ensemble qui est porté par ce dernier, dépasse cette valeur (qui est choisie en fonction de cet ensemble, bien entendu).

On voit aussi sur la figure 2 un câble électrique 18 en deux parties permettant la transmission de signaux électriques, qui sont respectivement fournis par les moyens bathymétriques et par un capteur de pression, ou "profondimètre", placé dans les moyens porteurs 6, à des moyens de traitement non représentés, qui sont placés dans l'hélicoptère 2 et qui traitent les signaux fournis par les moyens bathymétriques ou autres et par le capteur de pression en vue de déterminer la profondeur de la mer le long de la trajectoire suivie par l'hélicoptère.

Le câble électrique 18 est intégré au câble 4 qui constitue ainsi un câble électro-porteur.

La partie supérieure du câble 18 émerge des moyens de serrage 10 et se raccorde au câble d'entrée 19 (en deux parties) des moyens de traitement, par l'intermédiaire d'un connecteur largable 20, toujours pour des raisons de sécurité.

Ainsi, lorsque l'ensemble porté par le dynamomètre exerce sur celui-ci une traction qui dépasse la valeur déterminée, cet ensemble se sépare de l'hélicoptère.

Des bouées 22 sont fixées à la partie du câble 4 qui est comprise entre les moyens de serrage 10 et les moyens de lestage 8 et permettent de repérer, en vue d'une récupération, l'ensemble porté par le dynamomètre, au cas où cet ensemble se séparerait de l'hélicoptère lorsqu'on est en train de faire les mesures de profondeur.

Pour accroître la précision relative à la localisation de ces mesures de profondeur, on fait en sorte que les moyens porteurs 6, plus simplement appelés "soucoupe" par la suite, soient le plus prés possible de l'hélicoptère 2 lorsqu'ils sont tirés par ce dernier.

Les moyens de lestage 8 sont prévus à cet effet et permettent de désaccoupler les mouvements verticaux de l'hélicoptère des mouvements de la soucoupe 6 et de tendre la partie du câble 4 qui se trouve au-dessus de ces moyens de lestage 8.

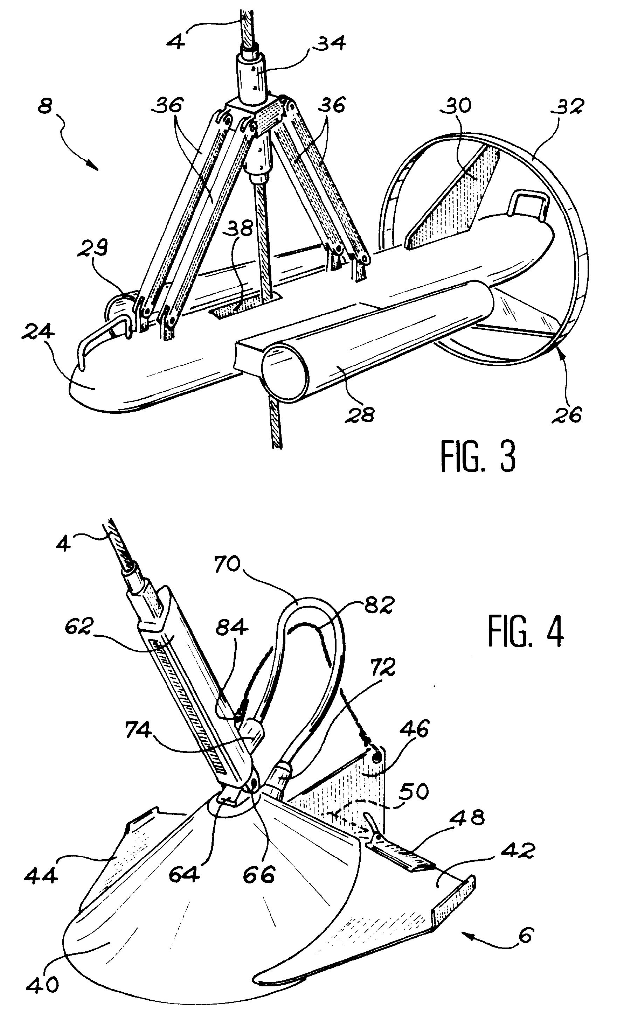

Ces derniers, qui sont par exemple en aluminium, sont représentés sur la figure 3.

Comme on le voit sur cette figure 3, ces moyens de lestage 8 comprennent une partie centrale allongée 24 sensiblement cylindrique, dont chacune des deux extrémités a la forme d'une ogive.

La partie centrale 24 est pourvue d'un empennage 26 et de deux tuyères latérales 28 et 29.

L'empennage 26 est destiné à stabiliser, en direction et en profondeur, la trajectoire des moyens de lestage 8 et comprend, dans l'exemple représenté, trois ailerons 30 disposés à 120° les uns des autres, à l'arrière de la partie centrale 24.

Une pièce circulaire 32 de faible épaisseur relie les extrémités des ailerons 30 et sert à protéger ces derniers.

Chacune des deux tuyères latérales 28 et 29 épouse la forme d'un tube qui est ouvert en ses deux extrémités et dont l'axe est parallèle à l'axe de la partie centrale 24.

Ces tuyères latérales donnent aux moyens de lestage 8 en mouvement une poussée vers l'avant et accroissent, de façon aérodynamique, l'action de lestage.

Les moyens de lestage représentés sur la figure 3 autorisent des déplacements jusqu'à 90 noeuds (155 km/h) avec une chaîne de mesure de 60 mètres de longueur, suspendue sous l'hélicoptère 2.

Les moyens de lestage 8 comprennent également, en leur partie supérieure, des moyens 34 de serrage du câble 4 et des biellettes 36 qui relient des moyens de serrage 34 à la partie centrale 24.

Chacune des bielettes 36 est articulée, en une extrémité, aux moyens de serrage 34 et, en son autre extrémité, à la partie centrale 24.

Le câble 4 traverse les moyens de serrage 34 qui permettent de fixer et de suspendre les moyens de lestage 8 au câble 4.

La partie centrale 24 des moyens de lestage 8 comporte aussi un ajourage, ou lumière, 38 qui est également traversé par le câble 4.

Cette partie centrale 24 est pourvue de compartiments internes non représentés, destinés à contenir des lests en plomb permettant un équilibrage de l'avant des moyens de lestage 6 vis-à-vis de l'arrière de ceux-ci.

Les moyens de lestage 8 permettent également à la chaîne de mesure (câble-soucoupe munie des moyens de mesure) d'être stable aussi bien lors des "transits" (déplacements dans l'air, à grande vitesse) de cette chaîne de mesure que lors des déplacements de la soucoupe dans l'eau, à plus faible vitesse.

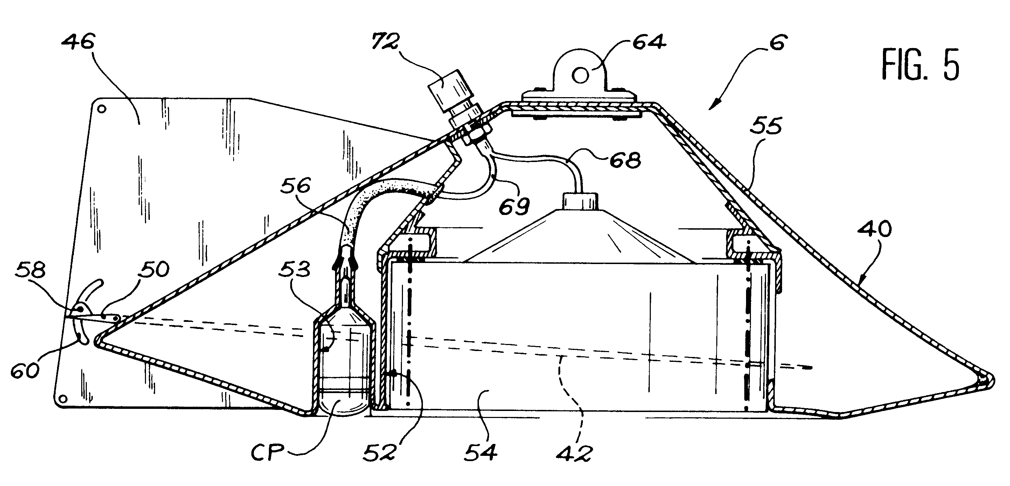

La soucoupe 6, par exemple en aluminium, est représentée en perspective sur la figure 4 et en coupe longitudinale sur la figure 5.

Elle comprend une partie sensiblement tronconique 40 qui est prolongée latéralement par deux ailerons 42 et 44 et dont l'arrière est muni d'une dérive 46 et de deux gouvernes latérales 48 et 50 situées de part et d'autre de la dérive 46.

A l'intérieur de la partie sensiblement tronconique 40 sont ménagés un logement 52 et un autre logement 53 qui débouchent sur le fond de cette partie 40.

Les moyens bathymétriques 54, par exemple du type écho-sondeur à céramique, sont placés dans le logement 52 de façon à pouvoir émettre un faisceau ultrasonore en direction du fond de la mer et recevoir un écho résultant de cette émission.

Le capteur de pression CP, qui permet de connaître la profondeur à laquelle se trouve la soucoupe, est placé dans le logement 53.

Les logements 52 et 53 sont remplis d'eau lorsque la soucoupe est sous la mer.

L'espace compris entre les logements 52 et 53 et les parois 55 de la partie sensiblement tronconique 40 forme, quant à lui, un compartiment étanche rempli d'air.

On voit sur la figure 5 que le logement 53 est raccordé de façon étanche au logement 52 par un conduit 56 prévu à cet effet.

Les gouvernes latérales 48 et 50 sont respectivement articulées sur les ailerons 42 et 44, à l'arrière de ceux-ci, et constituent des gouvernes de profondeur permettant d'ajuster la trajectoire de la soucoupe 6.

L'orientation de ces gouvernes 48 et 50 est déterminée au cours d'essais, préalablement à l'utilisation de la soucoupe pour les mesures de profondeur, et les gouvernes 48 et 50 sont alors immobilisées, avec l'orientation déterminée, au moyen d'une vis de serrage 58 qui traverse une rainure courbe 60 réalisée sur la dérive 46, la courbure de cette rainure autorisant bien entendu la rotation des gouvernes 48 et 50 pour leur réglage.

On va maintenant expliquer comment la soucoupe 6 est fixée à la partie inférieure du câble 4.

La soucoupe 6 est munie de moyens 62 te serrage du câble 4 (figure 4).

Ces moyens de serrage 62 sont articulés sur une chape 64 par l'intermédiaire d'une goupille 66 dont la résistance à la rupture a une valeur déterminée par les utilisateurs, pour des raisons de sécurité.

La chape 64 est fixée au sommet de la partie sensiblement tronconique 40.

La partie inférieure du câble 4 est emprisonnée dans les moyens de serrage 62.

Les signaux électriques fournis par l'écho-sondeur 54 sont transmis par un câble électrique 68 qui est situé dans la soucoupe 6.

Les signaux électriques fournis par le capteur CP sont transmis par un câble électrique 69 qui passe dans le conduit 56 et qui débouche dans le logement 52.

Les câbles 68 et 69 sont raccordés à un câble électrique (double) 70 extérieur à la soucoupe par l'intermédiaire d'un connecteur électrique largable approprié 72 qui est monté sur une paroi de la soucoupe 6.

Le câble 70 est lui-même raccordé, par l'intermédiaires de moyens de connexion électrique 74, au câble double 18 (figure 1) qui est intégré au câble électroporteur 4.

Une élingue 82, dont la résistance à la rupture a une valeur déterminée par les utilisateurs est fixée, par une extrémité, à la dérive 46 de la soucoupe 6 et par son autre extrémité, aux moyens de serrage 62, par l'intermédiaire d'un crochet 84.

L'élingue 82 permet la récupération de la soucoupe 6 en cas de rupture de la goupille 66, rupture qui peut par exemple se produire lorsque la soucoupe 6 se trouve bloquée par un obstacle imprévu.

La soucoupe 6 est conçue de façon à soustraire l'écho-sondeur 54 à l'influence de la houle.

Pour ce faire, la forme sensiblement tronconique de la partie 40, que l'on voit plus précisément sur la figure 5, est prévue pour donner à la soucoupe tractée une poussée descendante qui compense la poussée ascendante due au câble 4 qui tracte la soucoupe.

Ainsi, la soucoupe reste à une profondeur sensiblement constante lorsqu'elle est tractée.

Si besoin est, les gouvernes 48 et 50 sont réglées au préalable en vue de compenser une dérive ascendante ou descendante de la soucoupe.

La profondeur à laquelle reste la soucoupe 6 peut être comprise entre 5 et 10 m suivant la vitesse de l'hélicoptère 2.

Avec cette soucoupe, les faisceaux ultrasonores réfléchis par le fond de la mer sont captés par l'écho-sondeur avec un bon rapport signal/bruit, même par des fonds de 1500 m ou plus.

La profondeur donnée par le capteur de pression CP est ajoutée à la profondeur donnée par l'écho-sondeur pour obtenir la profondeur réelle.

L'écho-sondeur peut être de type mono-faisceau ou de type multi-faisceaux.

De plus, au lieu d'utiliser un écho-sondeur pour faire les mesures de profondeur, on peut utiliser des moyens de balayage par faisceau laser ou des moyens de balayage par faisceau radar (jusqu'à des profondeurs de l'ordre de 50 m et dans des eaux claires).

Les moyens bathymétriques peuvent être remplacés par d'autres moyens de sondage, par exemple des moyens d'imagerie acoustique, en adaptant, si nécessaire, la soucoupe 6 à ces autres moyens.

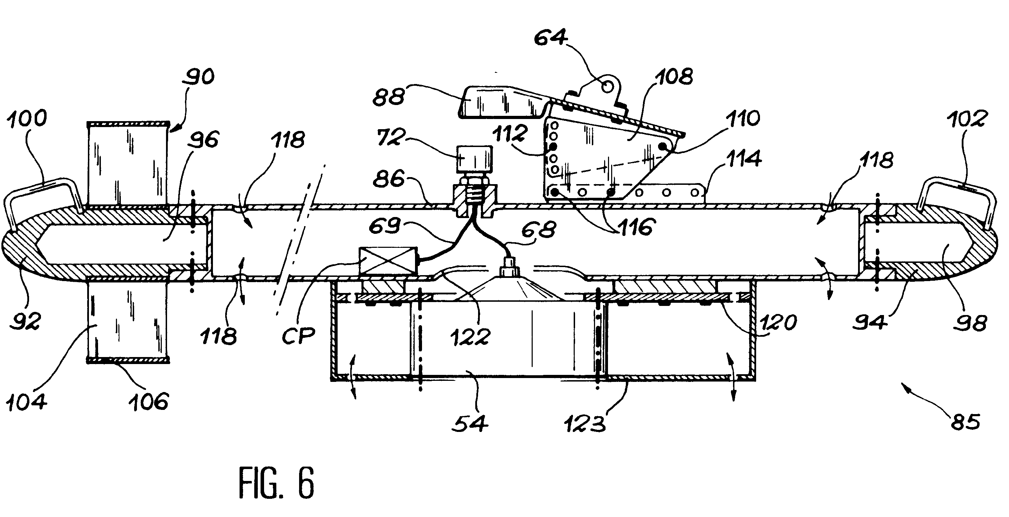

Dans un mode de réalisation préféré, qui est schématiquement représenté sur la figure 6 en coupe longitudinale, les moyens porteurs, référencés 85, comprennent un corps creux 86 de forme allongée et sensiblement cylindrique, un aileron de stabilisation 88 qui surmonte ce corps 86, et à l'arrière, un empennage 90. Ce corps creux 86 est prolongé en ses deux extrémités par des pièces 92 et 94 en forme d'ogive dans lesquelles sont respectivement formées des cavités 96 et 98 remplies d'air. Des poignées de transport 100 et 102 sont respectivement prévus sur les pièces 92 et 94.

L'empennage 90 est monté sur la pièce 92 correspondant à l'arrière du corps. Cet empennage 90 comprend par exemple quatre ailerons 104 à 90° les uns des autres, dont les extrémités sont reliées par une pièce circulaire 106 de faible épaisseur servant à protéger les ailerons 104.

L'aileron de stabilisation 88 est articulé sur un support 108 autour d'un axe 110 et bloqué, dans la position d'inclinaison choisie, par rapport au support 108, grâce à un boulon 112. Le support 108 est en outre réglable longitudinalement sur des brides de fixation 114 qui sont fixées à la partie supérieure du corps creux. Des boulons de blocage 116 sont prévus pour bloquer le support 108 sur les brides 114 dans la position longitudinale choisie.

Dans le cas de la figure 6, la chappe 64 est rendue rigidement solidaire de l'aileron 88 comme on le voit sur cette figure 6.

Au voisinage des pièces d'extrémité 92 et 94, le corps creux 86 est percé de trous 118 permettant son remplissage en eau lorsque les moyens porteurs 85 sont sous la mer.

Dans le cas de la figure 6, l'écho-sondeur 54 est fixé à la partie inférieure du corps creux 86 par l'intermédiaire d'une plaque 120 qui est percée à sa périphérie et au niveau de l'écho-sondeur 54. De même, le corps creux 86 comporte un perçage 122 au niveau de l'écho-sondeur 54. Ce dernier et la plaque 120 sont entourés par un carénage 123 de forme hydrodynamique. Ce carénage est percé et se remplit donc d'eau lorsque les moyens porteurs 85 sont en plongée.

Dans le cas de la figure 6, le capteur de pression CP est fixé à l'intérieur du corps creux 86 et le connecteur électrique largable 72 est monté sur la partie supérieure de ce corps creux 86. On voit sur la figure 6 les câbles 68 et 69 qui sont respectivement issus de l'écho-sondeur 54 et du capteur CP et qui vont au connecteur 72.

## Revendications

1. Procédé de mesure à la traîne dans l'eau, dans lequel des moyens porteurs (6, 85), auxquels sont fixés des moyens de mesure (54), sont traînés sous l'eau par un hélicoptère (2), par l'intermédiaire d'un câble (4), et les moyens porteurs (6,85), munis des moyens de mesure (54), ont une forme hydrodynamique telle qu'ils restent à une profondeur sensiblement constante lorsqu'ils sont traînés sous l'eau par l'intermédiaire du câble (4).

2. Procédé selon la revendication 1, caractérisé en ce que les moyens porteurs (6) comportent, à l'avant, une partie sensiblement tronconique (40) prévue pour leur donner, lorsqu'ils sont traînés sous l'eau, une poussée descendante qui compense la poussée ascendante due au câble.

3. Procédé selon la revendication 1, caractérisé en ce que les moyens porteurs (85) comprennent un corps (86) de forme allongée et sensiblement cylindrique, un aileron de stabilisation (88), qui surmonte ce corps, et un empennage (90) fixé à l'arrière du corps (86).

4. Procédé selon l'une quelconque des revendications 1 à 3, caractérisé en ce que des moyens de lestage (8) sont fixés à la partie aérienne du câble (4).

5. Système de mesure à la traîne dans l'eau, comprenant des moyens de mesure (54) et des moyens porteurs (6, 85) auxquels sont fixés les moyens de mesure et qui sont destinés à être traînés sous l'eau par un hélicoptère (2), par l'intermédiaire d'un câble (4), ayant les moyens porteurs (6, 85), munis des moyens de mesure (54), une forme hydrodynamique telle qu'ils restent à une profondeur sensiblement constante lorsqu'ils sont traînés sous l'eau par l'intermédiaire du câble (4).

6. Système selon la revendication 5, caractérisé en ce que les moyens porteurs (6) comportent, à l'avant, une partie sensiblement tronconique (40) prévue pour leur donner, lorsqu'ils sont traînés sous l'eau, une poussée descendante qui compense la poussée ascendante due au câble.

7. Système selon la revendication 6, caractérisé en ce que les moyens porteurs (6) comprennent :
- à l'avant, une partie sensiblement tronconique (40),
- à l'arrière, une dérive (46) et deux gouvernes (48, 50) et,
- deux ailerons latéraux (42, 44) prolongeant la partie sensiblement tronconique (40).

8. Système selon la revendication 5, caractérisé en ce que les moyens porteurs (85) comprennent un corps (86) de forme allongée et sensiblement cylindrique, un aileron de stabilisation (88), qui surmonte ce corps, et un empennage (90) fixé à l'arrière du corps (86).

9. Système selon l'une quelconque des revendications 5 à 8, caractérisé en ce qu'il comprend en outre des moyens (CP) de contrôle d'attitude des moyens porteurs (6, 85), qui sont montés sur ces derniers.

10. Système selon l'une quelconque des revendications 5 à 9, caractérisé en ce qu'il comprend en outre des moyens de lestage (8) destinés à être fixés à la partie aérienne du câble (4).

11. Système selon la revendication 10, caractérisé en ce que les moyens de lestage (8) comprennent une partie centrale sensiblement cylindrique (24), un empennage (26) et deux tuyères latérales (28, 29).

12. Système selon la revendication 11, caractérisé en ce que la partie centrale (24) est pourvue de moyens (34) de serrage du câble (4) et d'une lumière (38) permettant au câble (4) de traverser la partie centrale (24).

13. Système selon l'une quelconque des revendications 6 et 7, caractérisé en ce que les moyens porteurs (6) comportent un logement (52) qui débouche à la base de ces moyens porteurs (6, 85) et qui contient les moyens de mesure (54).

14. Système selon la revendication 8, caractérisé en ce que les moyens de mesure (54) sont fixés à la partie inférieure du corps (86) et entourés par un carénage (123) de forme hydrodynamique.

15. Système selon l'une quelconque des revendications 5 à 14, caractérisé en ce que les moyens de mesure sont des moyens de sondage (54).

## Patentansprüche

1. Unterwasser-Schleppmeßverfahren, bei dem die Trageinrichtungen (6, 85), an denen die Meßeinrichtungen (54) befestigt sind, unter Wasser gezogen werden durch einen Hubschrauber (2), mittels eines Kabels (4), und die Trageinrichtungen (6, 85), ausgerüstet mit Meßeinrichtungen (54), eine derartige hydrodynamische Form aufweisen, daß sie in einer im wesentlichen konstanten Tiefe bleiben, wenn sie mittels des Kabels (4) unter Wasser gezogen werden.

2. Verfahren nach Anspruch 1, dadurch gekennzeichnet, daß die Trageinrichtungen (6) vorn einen im wesentlichen kegelstumpfartigen Teil (40) aufweisen, vorgesehen um ihnen, wenn sie unter Wasser gezogen werden, eine nach unten gerichtete Kraft zu verleihen, die die durch das Kabel hervorgerufene, nach oben gerichtete Kraft ausgleicht.

3. Verfahren nach Anspruch 1, dadurch gekennzeichnet, daß die Trageinrichtungen (85) einen Rumpf (86) umfassen, mit länglicher Form und im wesentlichen zylindrisch, sowie ein Stabilisierungsruder (88) über diesem Rumpf und ein Leitwerk (90), befestigt an der Rückseite des Rumpfes (86).

4. Verfahren nach einem der Ansprüche 1 bis 3, dadurch gekennzeichnet, daß Auswieg- bzw. Ballasteinrichtungen (8) befestigt sind am dem in der Luft befindlichen Teil des Kabels (4).

5. Unterwasser-Schleppmeßsystem, umfassend Meßeinrichtungen (54) und Trageinrichtungen (6, 85), an denen die Meßeinrichtungen befestigt sind und die dazu bestimmt sind, unter Wasser gezogen zu werden durch einen Hubschrauber (2), mittels eines Kabels (4), wobei die Trageinrichtungen (6, 85), ausgerüstet mit Meßeinrichtungen (54), eine derartige hydrodynamische Form aufweisen, daß sie in einer im wesentlichen konstanten Tiefe bleiben, wenn sie mittels des Kabels (4) unter Wasser gezogen werden.

6. System nach Anspruch 5, dadurch gekennzeichnet, daß die Trageinrichtungen (6) vorn einen im wesentlichen kegelstumpfartigen Teil (40) aufweisen, vorgesehen um ihnen, wenn sie unter Wasser gezogen werden, eine nach unten gerichtete Kraft zu verleihen, die die durch das Kabel hervorgerufene, nach oben gerichtete Kraft ausgleicht.

7. System nach Anspruch 6, dadurch gekennzeichnet, daß die Trageinrichtungen (6) umfassen:
- vorn einen im wesentlichen kegelstumpfartigen Teil (40),
- hinten ein Flosse (46) und zwei Steuerflächen (48, 50), und
- zwei Seitenruder (42, 46), die den im wesentlichen kegelstumpfartigen Teil (40) verlängern.

8. System nach Anspruch 5, dadurch gekennzeichnet, daß die Trageinrichtungen (85) einen Rumpf (86) umfassen, mit länglicher Form und im wesentlichen zylindrisch, sowie ein Stabilisierungsruder (88) über diesem Rumpf und ein Leitwerk (90), befestigt an der Rückseite des Rumpfes (86).

9. System nach einem der Ansprüche 5 bis 8, dadurch gekennzeichnet, das es außerdem Lageüberwachungseinrichtungen (CP) der Trageinrichtungen (6, 85) umfaßt, die an diesen letzteren angebracht sind.

10. System nach einem der Ansprüche 5 bis 9, dadurch gekennzeichnet, daß es außerdem Ausgleich- bzw. Ballasteinrichtungen (8) umfaßt, die an dem in der Luft befindlichen Teil des Kabels (4) befestigt sind.

11. System nach Anspruch 10, dadurch gekennzeichnet, daß die Ballasteinrichtungen (8) einen zentralen, im wesentlichen zylindrischen Teil (24) aufweisen, ein Leitwerk (26) und zwei Seitendüsen (28, 29).

12. System nach Anspruch 11, dadurch gekennzeichnet, daß der zentrale Teil (24) mit Klemmeinrichtungen (34) für das Kabel (4) versehen ist und mit einem Langloch (38), das dem Kabel (4) ermöglicht, den zentralen Teil (24) zu durchqueren.

13. System nach einem der Ansprüche 6 und 7, dadurch gekennzeichnet, daß die Trageinrichtungen (6) eine Aufnahme (52) enthalten, die unten an diesen Trageinrichtungen (6, 85) mündet und die die Meßeinrichtungen (54) enthält.

14. System nach Anspruch 8, dadurch gekennzeichnet, daß die Meßeinrichtungen (54) befestigt sind am Unterteil des Rumpfes (86) und umgeben sind von einer stromlinienförmigen Verkleidung (123).

15. System nach einem der Ansprüche 5 bis 14, dadurch gekennzeichnet, daß die Meßeinrichtungen Lotungseinrichtungen (54) sind.

## Claims

1. Process for measurement when dragging in water, wherein the carrying means (6,85), to which are fixed the measuring means (54), are dragged beneath the water by a helicopter (2), by means of a cable (4), and the carrying means (6,85), provided with the measuring means (54), have a hydrodynamic shape such that they remain at a substantially constant depth when dragged underwater by means of the cable (4).

2. Process according to claim 1, characterized in that the carrying means (6) comprise, at the front, a substantially frustum-shaped portion (40) in order to give them, when they are dragged beneath the water, a downward thrust, which compensates the upward thrust due to the cable.

3. Process according to claim 1, characterized in that the carrying means (85) comprise a substantially cylindrical, elongated body (86), a stabilizing aileron (88) surmounting said body and a tail unit (90) fixed to the rear of the body (86).

4. Process according to any one of the claims 1 to 3, characterized in that ballasting means (8) are fixed to the aerial part of the cable (4).

5. System for measuring on dragging in water, comprising measuring means (54) and carrying means (6,85) to which are fixed the measuring means and which are dragged underwater by a helicopter (2), via a cable (4), and the carrying means (6,85), provided with the measuring means (54), have a hydrodynamic shape such that they remain at a substantially constant depth when dragged underwater by means of the cable (4).

6. System according to claim 5, characterized in that the carrying means (6) comprise, at the front, a substantially frustum-shaped portion (40) for giving them, when dragged underwater, a downward thrust compensating the upward thrust due to the cable.

7. System according to claim 6, characterized in that the carrying means (6) comprise, at the front, a substantially frustum-shaped portion (40), at the rear, a fin (46) and two control surfaces (48,50) and two lateral ailerons (42,44) extending the substantially frustum-shaped portion (40).

8. System according to claim 5, characterized in that the carrying means (85) comprise a substantially cylindrical, elongated body (86), a stabilizing aileron (88) surmounting said body and a tail unit (90) fixed to the rear of the body (86).

9. System according to any one of the claims 5 to 8, characterized in that it also comprises means (CP) for controlling the attitude of the carrying means (6,85) and which are fitted to the latter.

10. System according to any one of the claims 5 to 9, characterized in that it also has ballasting means (8) to be fixed to the aerial part of the cable (4).

11. System according to claim 10, characterized in that the ballasting means (8) comprise a substantially cylindrical central portion (24), a tail unit (26) and two lateral tail pipes (28,29).

12. System according to claim 11, characterized in that the central portion (24) is provided with means (34) for fixing the cable (4) and an opening (38) enabling the cable (4) to pass through the central portion (24).

13. System according to either of the claims 6 and 7, characterized in that the carrying means (6) comprise a recess (52), which issues at the base of these carrying means (6,85) and which contains the measuring means (54).

14. System according to claim 8, characterized in that the measuring means (54) are fixed to the lower portion of the body (8) and surrounded by a hydrodynamic fairing (123).

15. System according to any one of the claims 5 to 14, characterized in that the measuring means are sounding means (54).
